# EUROPÄISCHE PATENTSCHRIFT

(11) **EP 1 890 043 B1**
(45) Veröffentlichungstag und Bekanntmachung des Hinweises auf die Patenterteilung: **09.09.2009**
(21) Anmeldenummer: 07014243.5
(22) Anmeldetag: 20.07.2007
(51) Int. Cl.: F04D 29/70, F04D 25/12, B01D 46/42, F24F 13/28

(54) **Luftdurchtrittsvorrichtung mit einer verbesserten Zugänglichkeit der Filtermatte**
Air passage device with filter mat with improved accessibility
Dispositif de passage d'air doté d'une accessibilité améliorée de l'élément filtrant

(30) Priorität: 07.08.2006 DE 202006012058 U
(43) Veröffentlichungstag der Anmeldung: 20.02.2008
(73) Patentinhaber: Pfannenberg GmbH, 21035 Hamburg (DE)
(72) Erfinder: Pfannenberg, Andreas, 21035 Hamburg (DE)
(74) Vertreter: Richter, Joachim

(56) Entgegenhaltungen:
- US-A- 5 679 121
- US-A- 6 030 427
- US-A- 6 092 386
- US-B1- 6 354 936

## Beschreibung

Die Erfindung betrifft eine Luftdurchtrittsvorrichtung, insbesondere Filterlüfter oder Austrittsfilter, gemäß dem Oberbegriff des Anspruches 1.

Derartige Luftdurchtrittsvorrichtungen sind im Wesentlichen aus einem Lüftergitter und einem Grundgehäuse gebildet, wobei eine Filtermatte zwischen dem Lüftergitter und dem Grundgehäuse einsetzbar ist. Das Lüftergitter kann dabei mittels einer gelenkartigen Verbindung am Grundgehäuse angeordnet sein.

Das Lüftergitter sowie das Grundgehäuse weisen jeweilige Luftdurchtrittschlitze auf, zwischen denen die Filtermatte eingesetzt ist, so dass der Luftstrom die Filtermatte passiert. Die bei diesem Filterlüfter verwendeten Filtermatten sind zwischen dem Lüftergitter und dem Grundgehäuse eingeklemmt, wobei die Filtermatte selbst formstabil ausgebildet sein kann und mit versteiften Seitenwänden versehen ist.

Aus der Patentschrift DE 100 51 643 B4 ist ein Filterlüftergehäuse mit einem bodenseitigen Lufteintritt und einem Luftaustritt bekannt. Dabei steht der Lufteintritt im rechten Winkel zum Luftaustritt, wobei die Luftaustrittsöffnung mit dem Innenraum eines Schaltschrankes in Verbindung steht.

Im Innenraum des Gehäuses ist eine Filtermatte angeordnet, die eine Schrägstellung einnimmt, so dass der Luftstrom vom Lufteintritt zum Luftaustritt durch die Filtermatte geführt ist. Der Innenraum des Filtermattengehäuses ist über eine verschließbare Wartungsöffnung zugänglich, um einen Filtermattenwechsel vornehmen zu können.

Aus der Offenlegungsschrift DE 40 13 645 A1 ist ein Luftfilter für ein Elektronikgehäuse bekannt, welches ein Auswechseln der Filtermatten ohne Betriebsunterbrechung des Gerätes ermöglicht. Hierzu weist der Luftfilter eine Filtermatte, mittels derer Staub- und Verunreinigungen aus einem von außerhalb angesaugten Luftstrom entfernbar ist, und einen Träger auf, in welchem die Filtermatte angebracht ist und der einen Halterahmen sowie einen Griff zum Handhaben des Trägers umfasst. Des Weiteren sind Halteeinrichtungen zum einrastenden Halten des Trägers in oder an dem Gehäuse in dichtem Abschluss vor Lüftungsöffnungen des Gehäuses und Führungseinrichtungen vorgesehen, die derart an dem Gehäuse angebracht sind, dass der Träger durch eine Einschuböffnung im Gehäuse entlang der Führungseinrichtungen zu den Halteeinrichtungen und wieder hinaus bewegbar und in die Halteeinrichtungen einrastbar ist.

Das Gebrauchsmuster DE 20 2004 001 075 offenbart eine Luftdurchtrittsvorrichtung, insbesondere ein Filterlüfter oder Austrittsfilter mit oder ohne einem Gebläse für den Einbau in eine Montagedurchbrechung in einer Wand, insbesondere eines Gehäuses von Abwärme erzeugenden Bauteilen wie Schaltschrank, Elektronikschrank, Computersystem oder dergleichen, wobei die Luftdurchtrittsvorrichtung ein Grundgehäuse mit oder ohne einem Gebläseträger, ein als Designdeckel ausgebildetes Lüftergitter sowie eine zwischen dem Grundgehäuse und dem Lüftergitter angeordnete Filtermatte umfasst. Das Lüftergitter ist an dem Grundgehäuse mittels einer gelenkartigen Verbindung angeordnet und um eine Schwenkachse drehbar. Somit kann beispielsweise bei einem Wechsel der Filtermatte das Lüftergitter klappenartig aus dem Grundgehäuse durch eine Schwenkbewegung geöffnet werden, so dass die Filtermatte frei zugänglich ist. Die Verbindung zwischen dem Lüftergitter und dem Grundgehäuse umfasst eine Schwenkeinrichtung, welches als feststehendes oder lösbares Scharnier, als Rastscharnier oder als Filmscharnier ausgebildet ist.

Häufig sind die Luftdurchtrittsvorrichtungen jedoch an schwer zugänglichen Orten angeordnet, welche beispielsweise für einen Bediener nur über Kopf erreichbar sind. Ein Wechsel einer Filtermatte über Kopf des Bedieners ist dadurch erschwert, dass das Lüftergitter fest am Grundgehäuse angeordnet ist und lediglich eine einfache Schwenkbewegung ausführen kann. Häufig ist die Filtermatte im Lüftergitter selbst befestigt, so dass bei einem Ausschwenken des Lüftergehäuses aus dem Grundgehäuse die Filtermatte innerhalb des Lüftergitters oben aufliegt. Problematisch ist zudem die Herstellung einer Gelenkverbindung, welche häufig mittels separaten Gelenkverbindungselementen ausgerührt werden.

Eine Luftdurchtrittsvorrichtung gemäß dem Oberbegriff des Anspruches 1 ist durch die US-B-6,354,936 bekannt. Bei dieser Luftdurchtrittsvorrichtung sind zur Bildung der gelenkartigen Verbindung das Lüftergitter an zwei sich gegenüberliegenden Außenflächen nach außen gerichtete Gelenkzapfen vorgesehen, die in ihren Erstreckungsrichtungen eine gemeinsame Schwenkachse für das Lüftergitter bilden. Diese Gelenkzapfen greifen in bogenförmig verlaufende Langlöcher ein, die am Gehäuse der Vorrichtung ausgebildet sind. Durch das Zusammenwirken von Gelenkzapfen und Länglöchern ist nur eine Verschlussposition und eine Entnahmeposition erreichbar, jedoch keine Aufklapprastposition. Da die Langlöcher, in denen die Gelenkzapfen geführt sind, bogenförmig verlaufende Führungswandflächen aufweisen, können die Gelenkbolzen nur zwischen den beiden Enden der Langlöcher geführt werden.

Es ist daher die Aufgabe der vorliegenden Erfindung, eine Luftdurchtrittsvorrichtung zu schaffen, welche die Nachteile des voran genannten Standes der Technik überwindet und basierend auf einer einfachen Konstruktion eine hohe Flexibilität hinsichtlich der Bedienung des Lüftergitters und der Filtermatte ermöglicht.

Diese Aufgabe wird ausgehend von einer Luftdurchtrittsvorrichtung gemäß dem Oberbegriff des Anspruches 1 in Verbindung mit dessen kennzeichnenden Merkmalen gelöst. Vorteilhafte Weiterbildungen der Erfindung sind in den abhängigen Ansprüchen angegeben.

Danach sieht die Erfindung vor, dass die Gelenkzapfenführungsstrukturen zwischen der Verschlussposition A und der Entnahmeposition C je eine Aufklapprastposition B umfassen, wobei zwischen der Aufklapprastposition B und der Entnahmeposition C ein Sperrnocken zur Verhinderung eines direkten Überganges von der Aufklapprastposition B in die Entnahmeposition C vorgesehen ist, wobei die Gelenkzapfenführungsstruktur für ein verkantungsfreies Entlanglaufen der Gelenkzapfen in der Gelenkzapfenführungsstruktur aus Radienkonturen gebildet ist und zwischen der Verschlussposition A und der Aufklapprastposition B und der Entnahmeposition C zum Erreichen der jeweiligen Positionen A, B, C untereinander eine bahnartige Führung umfasst, und wobei der Übergang von der Aufklapprastposition B in die Entnahmeposition C durch eine planparallele Verschiebung des Lüftergitters gegenüber dem Grundgehäuse erreichbar ist.

Die Erfindung bietet dabei den Vorteil, dass die gelenkartige Verbindung mehrere Möglichkeiten der Handhabung des Lüftergitters zulässt. Das Lüftergitter kann in einer Verschlussposition innerhalb des Grundgehäuses angeordnet werden, und von der Verschlussposition in eine Aufklapprastposition überführt werden. Die Aufklapprastposition ermöglicht einen Zugang zur Filtermatte, so dass diese vom Bediener entnommen werden kann und gegen eine neue Filtermatte austauschbar ist. Die Filtermatte kann dabei innerhalb des Lüftergitters geklemmt werden, so dass die Filtermatte mit der Klappbewegung des Lüftergitters gemeinsam mit diesem aus dem Grundgehäuse ausklappt. Somit ist eine Entnahme der Filtermatte besonders einfach und vorteilhaft möglich.

Wird das Lüftergitter mit den Gelenkzapfen in die Entnahmeposition überführt, so kann mittels einer einfachen Handbewegung das Lüftergitter vollständig vom Grundgehäuse abgenommen werden. Insbesondere bei unzugänglichen Positionen der Luftdurchtrittsvorrichtung beispielsweise in einer Überkopfposition des Bedieners kann die Entnahme des Lüftergitters besonders vorteilhaft sein, um aus diesem die Filtermatte zu entnehmen und beispielsweise gegen eine neue Filtermatte zu tauschen.

Die Gelenkzapfenführungsstruktur führt die Gelenkzapfen des Lüftergitters, wobei die Gelenkzapfensführungsstruktur in der Entnahmeposition mündet, und die Führungsstruktur nach Außen freigibt. Somit können die Gelenkzapfen des Lüftergitters aus der bahnartigen Führungsstruktur entnommen werden. Wird das Lüftergitter wieder in das Grundgehäuse eingesetzt, so muss lediglich das Lüftergitter mit den daran angeordneten Gelenkzapfen in die Gelenkzapfenführungsstruktur eingefädelt werden, so dass über die Entnahmeposition sowohl die Verschlussposition als auch die Aufklapprastposition wieder einnehmbar ist.

Das Lüftergitter umfasst eine im Wesentlichen rahmenförmige Struktur mit innenseitig ausgebildeten Lüftungsschlitzen. Das Lüftungsgitter kann als Kunststoffspritzgussteil einteilig und materialeinheitlich hergestellt sein, wobei sämtliche Merkmale wie insbesondere die Gelenkzapfen an den Körper des Lüftungsgitters angeformt sind. Die Gelenkzapfen zeigen jeweils nach Außen, und sind auf einer gemeinsamen Schwenkachse angeordnet. Die sich gegenüberliegenden Außenflächen bilden beispielsweise die seitlichen senkrechten Begrenzungsflächen des Lüftungsgitters, wobei ferner die Schwenkachse auf der unteren Seite in der Horizontalen des Lüftungsgitters verläuft. Somit kann das Lüftungsgitter aus einer Vertikalen beginnend um die untere Kante des Lüftungsgitters gedreht werden, so dass sich die Schwenkachse zumindest in der Nähe der unteren Kante befindet. In der Verschlussposition rastet das Lüftungsgitter auf der oberen Seite innerhalb des Grundgehäuses ein.

Das Grundgehäuse weist zwei sich gegenüberliegende Innenflächen auf, in denen je eine Gelenkzapfenführungsstruktur ausgebildet ist, wobei die jeweiligen Innenflächen des Grundgehäuses an die jeweiligen Außenflächen des Lüftergitters angrenzen. So ist im verschlossenen Zustand das Lüftergitter innerhalb des Grundgehäuses eingefasst. Dabei grenzen die Innenflächen des Grundgehäuses an jeweils einer Seite an die Außenflächen des Lüftergitters an. Indem sich die beiden Flächen gegenüberstehen und an der Innenfläche des Grundgehäuses die Gelenkzapfenführungsstruktur ausgebildet ist und ferner an der Außenfläche des Lüftergitters die Gelenkzapfen ausgebildet sind, können diese innerhalb der Gelenkzapfenführungsstruktur einrasten und geführt werden. Das Spaltmaß zwischen den sich gegenüberliegenden Innen und Außenflächen ist derart eng bemessen, dass die Gelenkzapfen nicht aus der Gelenkzapfenführungsstruktur herausspringen können. Vorteilhafterweise verläuft die Schwenkachse in der Horizontalen und ist an der unteren Seite des Lüftergitters bzw. des Grundgehäuses angeordnet. Wird nun das Lüftergitter innerhalb des Grundgehäuses geöffnet, so schwenkt dieses um die Schwenkachse von der Verschlussposition in die Aufklapprastposition, wobei die Schwenkachse relativ zum Grundgehäuse nicht ortsfest ist, sondern von der Verschlussposition in die Aufklapprastposition wandert. Zugleich schwenkt das Lüftergitter um die Schwenkachse, bis dieses bei Erreichen der Aufklapprastposition durch den Gelenkzapfen zur Ruhe kommt. In der Aufklapprastposition ragt das Lüftergitter zumindest noch teilweise in das Grundgehäuse hinein, so dass die Innenflächen des Grundgehäuses und die Außenflächen des Lüftergitters zumindest im Bereich der gelenkartigen Verbindung noch gegenüberliegend angeordnet sind.

Besonders vorteilhaft ist, dass innerhalb der Gelenkzapfenführungsstruktur zwischen der Aufklapprastposition und der Entnahmeposition ein Sperrnocken vorgesehen ist, um einen direkten Übergang von der Aufklapprastposition in die Entnahmeposition zu verhindern. Der Sperrnocken ist durch eine nasenförmige Kontur zwischen der Entnahmeposition und der Aufklapprastposition ausgebildet, so dass das Lüftergitter zunächst in oder zumindest in die Nähe der Verschlussposition zurückgeführt werden muss, damit der Gelenkzapfen innerhalb der Gelenkzapfenführungsstruktur den Weg in Richtung der Entnahmeposition einschlagen kann.

Die Gelenkzapfenführungsstruktur ist dabei aus Radienkonturen gebildet, um ein verkantungsfreies Entlanglaufen bzw. -gleiten der Gelenkzapfen innerhalb der Gelenkzapfenführungsstruktur zu schaffen. Gemäß einer abstrakten Betrachtung entspricht die Form der Gelenkzapfeneinem ausgestreckten Fuß mit Übergang in einen Unterschenkel. Die Fußspitze wird dabei durch die Verschlussposition gebildet, wobei die Verse durch die Aufklapprastposition gebildet wird. Der Sperrnocken entspricht ferner dem Achilles-Bereich, so dass die Entnahmeposition dem Übergang in den Unterschenkel entspricht. Somit ist verständlich, dass die Gelenkzapfenführungsstruktur lediglich Radienkonturen umfasst, ohne dass die weichen Radienkonturen durch Ecken oder aufeinander treffende Kanten unterbrochen wird.

Gemäß einer weiteren vorteilhaften Ausführungsform der Erfindung ist die Gelenkzapfenführungsstruktur in der Innenfläche mit einer Tiefe von 0,2 mm bis 2,5 mm, bevorzugt von 0,5 mm bis 1,5 mm und besonders bevorzugt von 1,0 mm ausgebildet. Die Strukturtiefe der Gelenkzapfenführungsstruktur ist damit geringfügiger als die Länge der Gelenkzapfen. Damit wird erreicht, dass die Innenflächen der Grundgehäuse nicht plan an den Außenflächen des Lüftergitters anliegen, sondern durch die längeren Gelenkzapfen einen Spalt auseinander gehalten werden. Gemäß der Gesamtausbildung der Gelenkzapfenführungsstruktur kann diese dahingehend verstanden werden, dass zwischen der Verschlussposition und/oder der Aufklapprastposition und/oder der Entnahmeposition eine jeweilige bahnartige Führung vorgesehen ist, so dass die jeweiligen Positionen untereinander erreichbar sind. Der Gelenkzapfen verläuft innerhalb der Bahnen zwischen den jeweiligen Positionen, und wird durch die Radienkonturen geführt. Damit ist das Lüftungsgitter gegenüber dem Grundgehäuse zwischen der Verschlussposition und der Aufklappposition bzw. der Entnahmeposition zwangsgeführt, wobei die Breite der Führungsbahnen zwischen den einzelnen Position größer ist als der Durchmesser des Gelenkzapfens, um ein Mindestspiel aufrecht zu erhalten.

Die Gelenkzapfenführungsstruktur ist innerhalb der Innenseite des Grundgehäuses jeweils rechts- und linksseitig derart ausgebildet, dass der Übergang von der Aufklapprastposition in die Entnahmeposition durch eine planparallele Verschiebung des Lüftergitters gegenüber dem Grundgehäuse erreichbar ist. Zunächst muss dafür das Lüftergitter geringfügig geöffnet werden, so dass dieses in kleinem Winkel aus dem Grundgehäuse herausgeklappt ist. Durch eine planparallele Verschiebung des Lüftergitters kann der Sperrnocken mittels des Gelenkzapfens derart umfahren werden, dass die Entnahmeposition erreichbar ist. Dabei ist die Planparallelität der Verschiebung lediglich näherungsweise zu verstehen, da sowohl das Lüftergitter als auch das Grundgehäuse ausschließlich in der Verschlussposition planparallel zueinander angeordnet sein können.

Vorteilhafterweise weisen die Gelenkzapfen eine Anschrägung auf, welche in Richtung des angrenzend zum Lüftergitter anordenbaren Grundgehäuses weisen und eine teilweise Verkürzung des Gelenkzapfens umfassen. Damit ist erreichbar, dass das Lüftergitter leichter in das Grundgehäuse eingefügt werden kann. Die Anschrägung bewirkt eine geringfügige Verkürzung des Gelenkzapfens, so dass das Einfädeln der jeweiligen Außenflächen des Lüftergitters in die Innenflächen des Grundgehäuses erleichtert ist.

Gemäß eines weiteren vorteilhaften Ausführungsbeispiels nimmt der Gelenkzapfen im geschlossenen Zustand des Lüftergitters im Grundgehäuse die Verschlussposition ein, wobei das Grundgehäuse das Lüftergitter teilweise umrahmt, so dass eine planparallele Bewegung zwischen dem Lüftergitter und dem Grundgehäuse verhindert ist. Ferner ist das Lüftergitter im geschlossenen Zustand mit dem Grundgehäuse durch den Gelenkzapfen zumindest auf der Seite der Schwenkachse haltend verbunden. Das Lüftergitter wird somit durch die Gelenkzapfen innerhalb des Grundgehäuses auf der Seite der Gelenkachse haltend verbunden, wobei auf der gegenüberliegenden Seite ebenfalls nockenartige Erhebungen innerhalb des Rahmens des Lüftungsgitters angeformt sein können, welche in gegenüberliegende Sperrklinken einrasten. Die Sperrklinken sind im inneren Rahmenbereich des Grundgehäuses angeformt, so dass das Lüftergitter lediglich durch die Gelenkzapfen sowie die nockenartigen Erhebungen innerhalb des Lüftergitters im Grundgehäuse haltend angeordnet und verschlossen wird. Um den Schwenkwinkel des Lüftergitters um die Schwenkachse herum zu begrenzen, kann eine Körperkante des Lüftergitters bei einer Rast des Gelenkzapfens in der Aufklapprastposition an eine Körperkante des Grundgehäuses anstoßen. Die jeweiligen Körperkanten stehen sich derart gegenüber, dass diese sich erst bei Drehung des Lüftergitters um die Schwenkachse berühren und folglich die Schwenkbewegung begrenzen.

Weitere, die Erfindung verbessernde Maßnahmen sind in den Unteransprüchen angegeben oder werden nachfolgend gemeinsam mit der Beschreibung eines bevorzugten Ausführungsbeispiels der Erfindung anhand der Figuren näher dargestellt. Es zeigen:
- Fig. 1: eine schaubildliche Explosionszeichnung der Luftdurchtrittsvorrichtung, umfassend eine Filtermatte, ein Lüftergitter, ein Grundgehäuse sowie einen optionalen Ventilator;
- Fig. 2: eine schaubildliche perspektivische Darstellung des Grundgehäuses mit aufgeklappten Lüftergitter und einer zwischen dem Grundgehäuse und dem Lüftergitter angeordneten Filtermatte;
- Fig. 3: eine ausschnittsweise schaubildliche Darstellung des Lüftergitters im Bereich der Außenfläche mit einem innerhalb der Außenfläche angeformten Gelenkzapfen;
- Fig. 4: eine ausschnittsweise schaubildliche Darstellung des Grundgehäuses im Bereich der Innenfläche mit einer innerhalb dieser ausgebildeten Gelenkzapfenführungsstruktur; und

- Fig. 5: eine vergrößerte Ansicht der Gelenkzapfenführungsstruktur innerhalb der Innenfläche des Grundgehäuses gemäß Fig. 4.

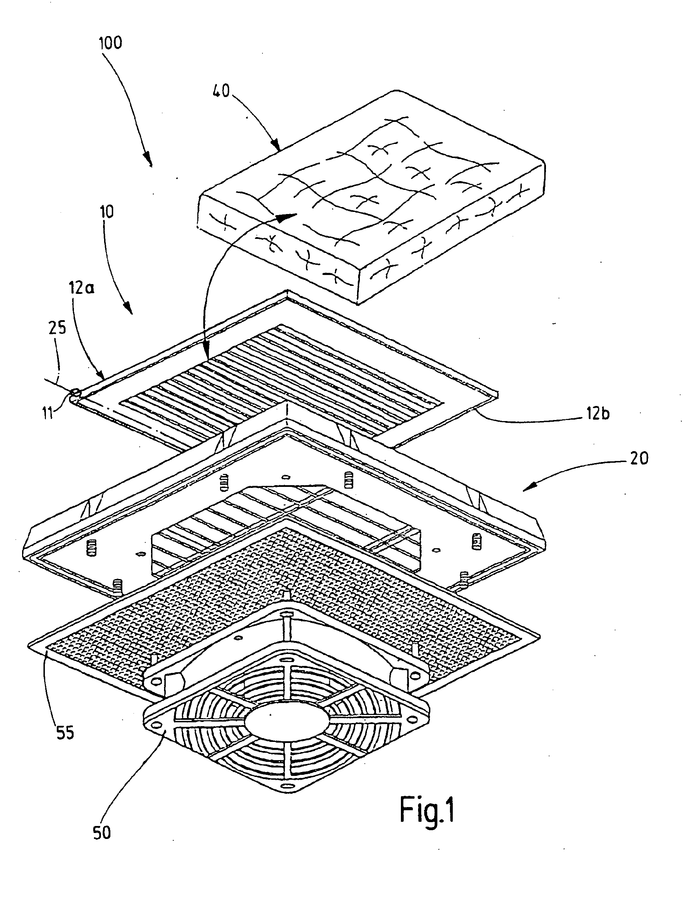

Die in der Fig. 1 dargestellte Luftdurchtrittsvorrichtung 100 dient zum Einbau in einer Montagedurchbrechung in einer Wand oder in einem Gehäuse eines Schaltschrankes oder dergleichen. Ein Grundgehäuse 20 ist dafür vorgesehen, diese in die Montagedurchbrechung fest einzubauen. Das Grundgehäuse 20 ist rahmenartig ausgebildet und kann in der Montagedurchbrechung entweder verschraubt, geklemmt oder auch eingeklebt, eingeschäumt oder einzementiert werden. Der Rahmen des Grundgehäuses 20 verfügt über ein mittiges Luftdurchtrittsgitter, durch welches die zu fördernde Luft hindurchtreten kann. Gemäß der Darstellung in Fig. 1 ist die Luftdurchtrittsvorrichtung 100 mit einem Gebläse 50 ausgeführt, welches über ein Zwischengitter 55 am Grundgehäuse 20 angeordnet wird.

Auf der montageoffenen Seite des Grundgehäuses 20 kann ein Lüftergitter 10 mittels einer gelenkartigen Verbindung schwenkbar befestigt werden. Die schwenkbare Befestigung wird über Gelenkzapfen 11 geschaffen, welche am Lüftergitter 10 angeordnet sind. Das Lüftergitter 10 ist seitlich über eine erste Außenfläche 12a und eine zweite Außenfläche 12b begrenzt, auf welchen jeweils ein Gelenkzapfen 11 angeformt ist. Die Gelenkzapfen 11 erstrecken sich aus der jeweiligen Außenfläche 12a und 12b in einer gemeinsamen Schwenkachse 25. Das Lüftergitter 10 ist zur Aufnahme einer Filtermatte 40 geeignet, wobei die Filtermatte 40 auf der Innenseite des Lüftergitters 10 angeordnet werden kann. Wird nun das Lüftergitter 10 im Grundgehäuse 20 befestigt und in diesem verschlossen, so befindet sich die Filtermatte 40 zwischen dem Lüftergitter 10 und dem Grundgehäuse 20. Aufgrund der schaubildlichen Explosionsdarstellung ist die Fügerichtung der Filtermatte 40 mittels eines Pfeiles angedeutet.

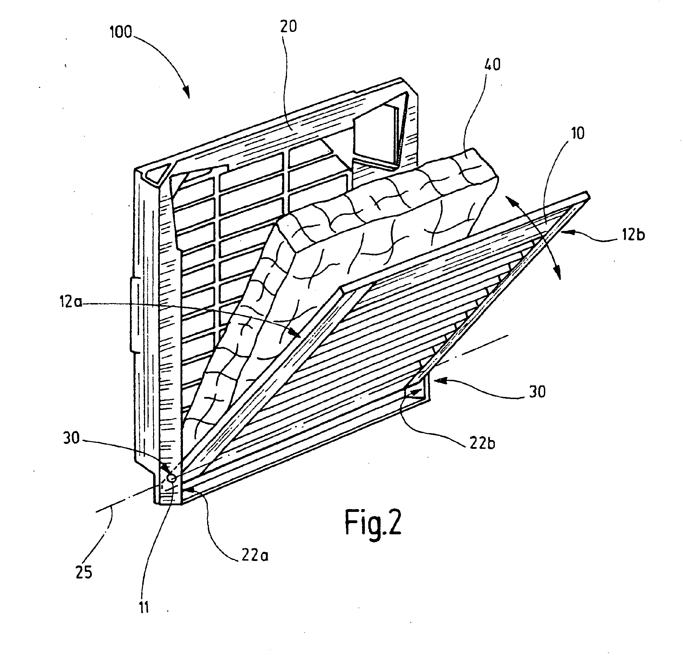

Fig. 2 zeigt die Luftdurchtrittsvorrichtung 100 ohne das Gebläse und das Zwischengitter. Gemäß der Darstellung ist das Lüftergitter 10 in das Grundgehäuse 20 eingesetzt, und über die gelenkartige Verbindung 30 haltend an diesem befestigt. Die Darstellung verdeutlicht die Schwenkbarkeit des Lüftergitters 10 um die Schwenkachse 25. Die Filtermatte 40 ist in loser Anordnung zwischen dem Lüftergitter 10 und dem Grundgehäuse 20 in einer Position gezeigt, in welcher diese gewechselt werden kann. Die links- und rechtsseitige gelenkartige Verbindung 30 wird über die Gelenkzapfen 11 geschaffen, wobei aufgrund der perspektivischen Darstellung nur der vordere Gelenkzapfen 11 erkennbar ist. Dieser erstreckt sich in Richtung der Innenfläche 22a des Grundgehäuses 20. Gegenüberliegend weist das Grundgehäuse 20 die Innenfläche 22b auf, in der sich in gleicher Weise ein Gelenkzapfen 11 erstreckt. Die Außenfläche 12a steht im gefügten Zustand des Lüftergitters 10 im Grundgehäuse 20 der Innenfläche 22a unmittelbar angrenzend gegenüber, wobei die Außenfläche 12b der Innenfläche 22b gegenübersteht.

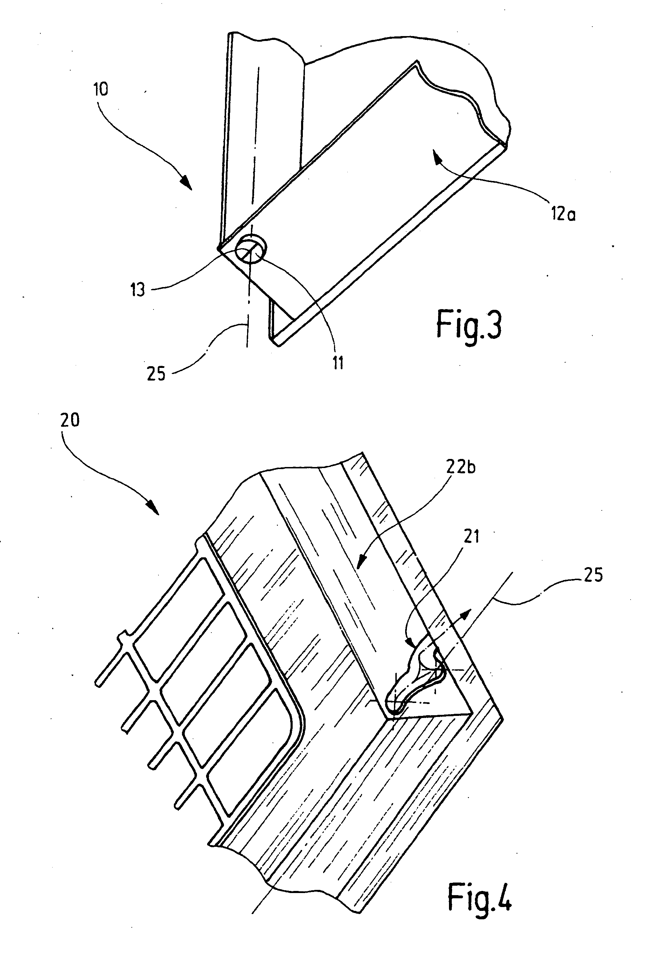

Fig. 3 zeigt eine vergrößerte Darstellung der Anordnung des Gelenkzapfens 11 an der Außenfläche 12a des Lüftergitters 10. Der Gelenkzapfen 11 erstreckt sich in Richtung der Schwenkachse 25 und ist etwa im Eckbereich des rahmenartigen Lüftergitters 10 angeordnet. Um das Fügen des Lüftergitters 10 in das Grundgehäuse zu erleichtern, ist der Gelenkzapfen 11 mit einer Anschrägung 13 versehen, welche in Form einer schiefen Ebene zumindest die Hälfte des Gelenkzapfens 11 verkürzt, um ein Einfädeln des Gelenkzapfens 11 zu erleichtern.

Fig. 4 zeigt die Innenseite 22b des Grundgehäuses 20. In dieser ist eine Gelenkzapfenführungsstruktur 21 vorhanden, welche in Form einer bahnartigen Vertiefung in der Innenfläche 22b eingebracht ist. In die bahnartige Gelenkzapfenführungsstruktur 21 kann nunmehr zum Fügen des Lüftergitters 10 an das Grundgehäuse 20 der jeweils zugeordnete Gelenkzapfen 11 (siehe Fig. 3) eingefädelt werden, so dass der Gelenkzapfen 11 in der Gelenkzapfenführungsstruktur 21 geführt wird. Durch eine gestrichelte Linie ist die Führungsbahn des Gelenkzapfens 11 innerhalb der Gelenkzapfenführungsstruktur 21 angedeutet.

Es sei darauf hingewiesen, dass aufgrund der perspektivischen Darstellungen des Lüftergitters 10 in Fig. 3 und des Grundgehäuses 20 in Fig. 4 jeweils nur eine Seite der gelenkartigen Verbindung 30 darstellbar ist. Vielmehr umfasst sowohl die Außenfläche 12a als auch die Außenfläche 12b des Lüftergitters 10 je einen Gelenkzapfen 11, wobei ferner sowohl die Innenfläche 22a als auch die Innenfläche 22b des Grundgehäuses 20 je eine Gelenkzapfenführungsstruktur 21 aufweist. Somit wird verständlich, dass je eine Gelenkzapfenführungsstruktur 21 jeweils einen Gelenkzapfen 11 aufnimmt.

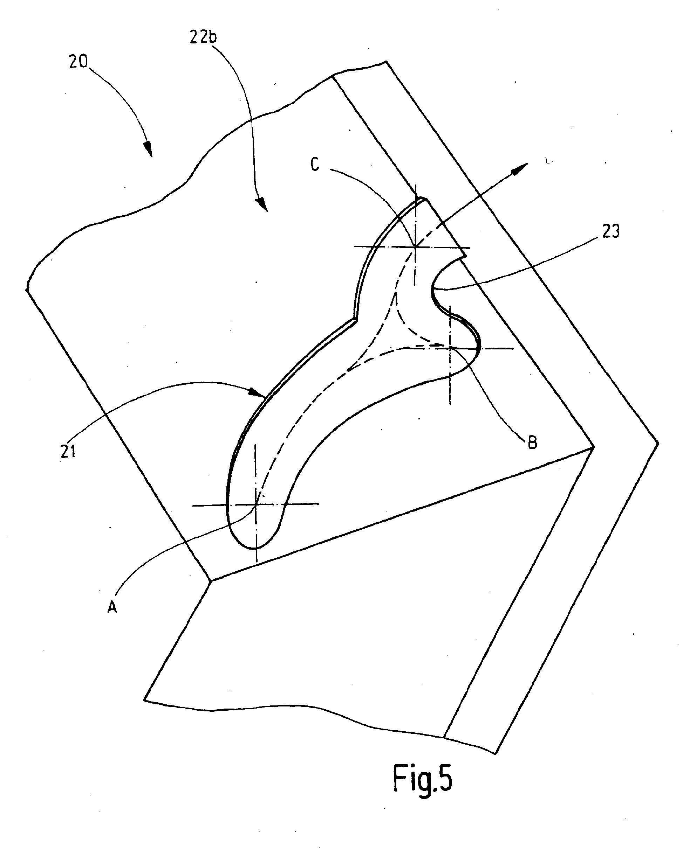

Fig. 5 zeigt eine vergrößerte perspektivische Darstellung der Gelenkzapfenführungsstruktur 21 innerhalb des Grundgehäuses 20. Diese ist in der Innenfläche 22b ausgebildet, und weist eine bahnartige Vertiefung innerhalb der Innenfläche 22b auf. Die Gelenkzapfenführungsstruktur 21 verbindet wenigstens eine Verschlussposition A, eine Aufklapprastposition B und eine Entnahmeposition C miteinander. Die jeweiligen Positionen sind mittels strichpunktierten Kreuzen dargestellt, wobei die Entnahmeposition C keine Rastposition bildet, sondern lediglich die Position andeutet, aus der der Gelenkzapfen 11 die Gelenkzapfenführungsstruktur 21 verlassen kann. Dies ist mit einem Pfeil angedeutet. Die Bahnen, auf denen die Gelenkzapfen 11 zwischen den einzelnen Positionen A, B und C verschoben werden können, sind mittels einer gestrichelten Linie dargestellt. Befindet sich nun der Gelenkzapfen 11 in der Verschlussposition A, so ist das Lüftergitter 10 vollständig im Grundgehäuse 20 eingesetzt und bildet den verschlossen Zustand der Luftdurchtrittvorrichtung 100. Wird das Lüftergitter 10 entriegelt und aus dem Grundgehäuse 20 herausgeschwenkt, so wandert der Gelenkzapfen von der Verschlussposition A zunächst in die Aufklapprastposition B. In der Aufklapprastposition B kann die Filtermatte bereits entnommen werden, was der Darstellung in Fig. 2 entspricht.

Sollte erforderlich sein, dass Lüftergitter 10 vollständig aus dem Grundgehäuse 20 zu entnehmen, so kann dies durch eine leichte in etwa planparallele Verschiebung gegenüber dem Grundgehäuse 20 in die Entnahmeposition C überführt werden, so dass Lüftergitter 10 in sehr einfacher Weise vom Grundgehäuse 20 vollständig entnommen werden kann. Damit ein Übergang von der Aufklapprastposition B in die Entnahmeposition C nicht selbsttätig erfolgen kann, ist ein Sperrnocken 23 vorgesehen, um den der Gelenkzapfen 11 zunächst herumgeführt werden muss, um in die Entnahmeposition C zu gelangen. Damit wird sichergestellt, dass das Lüftergitter 10 in der Aufklapprastposition B selbsthaltend angeordnet ist, und nicht ungewollt aus dem Grundgehäuse 20 herausfallen kann.

Die vorliegende Erfindung beschränkt sich in ihrer Ausführung nicht auf das vorstehende angegebene, bevorzugte Ausführungsbeispiel. Vielmehr ist eine Anzahl von Varianten denkbar, welche von der dargestellten Lösung auch bei grundsätzlich anders gearteten Ausführungen Gebrauch macht. Ebenfalls sei explizit erwähnt, dass die Gelenkzapfen 11 am Lüftergitter 10 mit der Gelenkzapfenführungsstruktur 21 des Grundgehäuses 20 vertauschbar ist, wodurch die gleiche Funktionalität der erfindungsgemäßen Luftdurchtrittsvorrichtung 100 erreichbar ist.

### BEZUGSZEICHENLISTE

- 100: Luftdurchtrittsvorrichtung

- 10: Lüftergitter
- 11: Gelenkzapfen
- 12: Außenfläche
- 13: Anschrägung

- 20: Grundgehäuse
- 21: Gelenkzapfenführungsstruktur
- 22: Innenfläche
- 23: Sperrnocken
- 25: Schwenkachse

- 30: gelenkartige Verbindung

- 40: Filtermatte

- 50: Gebläse
- 55: Zwischengitter

- A: Verschlussposition
- B: Aufklapprastposition
- C: Entnahmeposition

## Patentansprüche

1. Luftdurchtrittsvorrichtung (100) , welche im Wesentlichen aus einem Lüftergitter (10) und einem Grundgehäuse (20) gebildet ist, und eine Filtermatte (40) zwischen dem Lüftergitter (10) und dem Grundgehäuse (20) einsetzbar ist, wobei das Lüftergitter (10) mittels einer gelenkartigen Verbindung (30) am Grundgehäuse (20) angeordnet ist, wobei zur Bildung der gelenkartigen Verbindung (30) das Lüftergitter (10) an zwei sich gegenüberliegenden Außenflächen (12a, 12b) nach außen gerichtete und in ihren jeweiligen Erstreckungsrichtungen eine gemeinsame Schwenkachse (25) bildende Gelenkzapfen (11) aufweist, welche in im Grundgehäuse eingebrachten Gelenkzapfenführungsstrukturen (21) führbar sind, wobei die Gelenkzapfenführungsstrukturen (21) eine Verschlussposition (A) und eine Entnahmeposition (C) miteinander verbindet,
**dadurch gekennzeichnet,**
**dass** die Gelenkzapfenführungsstrukturen (21) zwischen der Verschlussposition (A) und der Entnahmeposition (C) je eine Aufklapprastposition (B) umfassen, wobei zwischen der Aufklapprastposition (B) und der Entnahmeposition (C) ein Sperrnocken (23) zur Verhinderung eines direkten Überganges von der Aufklapprastposition (B) in die Entnahmeposition (C) vorgesehen ist, wobei die Gelenkzapfenführungsstruktur (21) für ein verkantungsfreies Entlanglaufen der Gelenkzapfen (11) in der Gelenkzapfenführungsstruktur (21) aus Radienkonturen gebildet ist und zwischen der Verschlussposition (A) und der Aufklapprastposition (B) und der Entnahmeposition (C) zum Erreichen der jeweiligen Positionen (A, B, C) untereinander eine bahnartige Führung umfasst, und wobei der Übergang von der Aufklapprastposition (B) in die Entnahmeposition (C) durch eine planparallele Verschiebung des Lüftergitters (10) gegenüber dem Grundgehäuse (20) erreichbar ist.

2. Luftdurchtrittsvorrichtung nach Anspruch 1,
**dadurch gekennzeichnet,**
**dass** das Grundgehäuse (20) zwei sich gegenüberliegende Innenflächen (22a, 22b) aufweist, in denen je eine Gelenkzapfenführungsstruktur (21) ausgebildet ist, wobei die jeweiligen Innenflächen (22a, 22b) des Grundgehäuses (20) an die jeweiligen Außenflächen (12a, 12b) des Lüftergitters (10) angrenzen.

3. Luftdurchtrittsvorrichtung nach Anspruch 1 und 2,
**dadurch gekennzeichnet,**
**dass** die Gelenkzapfenführungsstruktur (21) in der Innenfläche (22a, 22b) mit einer Tiefe von 0,2 mm bis 2,5 mm, bevorzugt von 0,5 mm bis 1,5 mm und besonders bevorzugt von 1,0 mm ausgebildet ist.

4. Luftdurchtrittsvorrichtung nach einem der vorhergehenden Ansprüche 1 bis 3,
**dadurch gekennzeichnet,**
**dass** die Gelenkzapfen (11) eine Anschrägung (13) aufweisen, welche in Richtung des angrenzend zum Lüftergitter (10) anordenbaren Grundgehäuses (20) weisen und eine teilweise Verkürzung des Gelenkzapfens (11) umfassen.

5. Luftdurchtrittsvorrichtung nach einem der vorhergehenden Ansprüche 1 bis 4,
**dadurch gekennzeichnet,**
**dass** der Gelenkzapfen (11) im geschlossenen Zustand des Lüftergitters (10) im Grundgehäuse (20) die Verschlussposition (A) einnimmt, wobei das Grundgehäuse (20) das Lüftergitter (10) teilweise umrahmt, sodass eine planparallele Bewegung zwischen dem Lüftergitter (10) und dem Grundgehäuse (20) verhindert ist.

6. Luftdurchtrittsvorrichtung nach Anspruch 5,
**dadurch gekennzeichnet,**
**dass** das Lüftergitter (10) im geschlossenen Zustand mit dem Grundgehäuse (20) durch den Gelenkzapfen (11) zumindest auf der Seite der Schwenkachse (25) haltend verbunden ist.

7. Luftdurchtrittsvorrichtung nach einem der vorhergehenden Ansprüche 1 bis 6,
**dadurch gekennzeichnet,**
**dass** eine Körperkante des Lüftergitters (10) bei einer Rast des Gelenkzapfens (11) in der Aufklapprastposition (B) an eine Körperkante des Grundgehäuses (20) anstößt, sodass der Schwenkwinkel in der Schwenkachse (25) begrenzbar ist.

## Claims

1. Air passage device (100) which is made essentially of a fan grid (10) and a basic housing (20) and whereby a filter mat (40) can be placed between the fan grid (10) and the basic housing (20), whereby the fan grid (10) is placed by means of a hinge-type joint (30) on the basic housing (20), whereby the fan grid (10), for forming the hinge-type joint (30), has on two opposite outer surfaces (12a, 12b) outwards directed pivots (11) and which form a common swivelling axis (25) in their respective directions of extension, these pivots being able to be guided in pivot guiding structures (21) placed in the basic housing, whereby a closing position (A) and a withdrawal position (C) connects the pivot guiding structures (21) with each other,
**characterized in**
**that** the pivot guiding structures (21) comprise between the closing position (A) and the withdrawal position (C) respectively a swing open snap-in position (B), whereby a locking cam (23) is provided for avoiding a direct transition from the swing open snap-in position (B) into the withdrawal position (C), whereby the pivot guiding structure (21) is formed of radius contours for a chock free running of the pivots (11) in the pivot guiding structure (21) and comprises a guideway-like guide between the closing position (A) and the swing open snap-in position (B) and the withdrawal position (C) for reaching the respective positions (A, B, C) with respect to each other and whereby the transition from the swing open snap-in position (B) into the withdrawal position (C) can be achieved by a plane-parallel displacement of the fan grid (10) with respect to the basic housing (20).

2. Air passage device according to claim 1,
**characterized in**
**that** the basic housing (20) has two opposite inner surfaces (22a, 22b) in which a pivot guiding structure (21) is respectively configured, whereby the respective inner surfaces (22a, 22b) of the basic housing (20) are adjacent to the respective outer surfaces (12a, 12b) of the fan grid (10).

3. Air passage device according to claim 1 and 2,
**characterized in**
**that** the pivot guiding structure (21) is configured with a depth of the inner surface (22a, 22b) of 0,2 mm to 2,5 mm, preferably of 0,5 mm to 1,5 mm and particularly preferably of 1,0 mm.

4. Air passage device according to any of the preceding claims,
**characterized in**
**that** the pivots (11) have a slant part (13) which is orientated in direction of the basic housing (20) which can be placed adjacent to the fan grid (10) and which comprises a partial shortening of the pivot (11).

5. Air passage device according to any of the preceding claims,
**characterized in**
**that** the pivots (11) take on the closing position (A) when the fan grid (10) in the basic housing (20) is in closed condition, whereby the basic housing (20) frames partially the fan grid (10) so that a plane-parallel movement between the fan grid (12) and the basic housing (20) is avoided.

6. Air passage device according to claim 5,
**characterized in**
**that** the fan grid (10) in closed condition is connected with the basic housing (20) by the pivot (11) holding at least on the side of the swivelling axis (25).

7. Air passage device according to any of the preceding claims,
**characterized in**
**that** a body edge of the fan grid (10) for a catch of the pivot (11) in the swing open snap-in position (B) ends on a body edge of the basic housing (20) so that the pivoting angle in the swivelling axis (25) can be limited.

## Revendications

1. Dispositif de passage d'air (100) qui est formé substantiellement par une grille de ventilateur (10) et un boîtier de base (20) et une natte filtrante (40) pouvant être mise en place entre la grille de ventilateur (10) et le boîtier de base (20), la grille de ventilateur (10) étant placée sur le boîtier de base au moyen d'un assemblage de type articulation (30), cependant que, pour former l'assemblage de type articulation (30), la grille de ventilateur (10) présente, sur deux faces extérieures en face l'une de l'autre (12a, 12b), des pivots (11) orientés vers l'extérieur et formant un axe de pivotement commun dans leurs directions d'extension respectives qui peuvent être guidés dans des structures de guidage de pivot (21) mises en place dans le boîtier de base, cependant qu'une position de fermeture (A) et une position d'enlèvement (C) relie les structures de guidage de pivot (21) l'une à l'autre,
**caractérisé en ce**
**que** les structures de guidage de pivot (21) comprennent respectivement une position d'enclenchement d'ouverture (B) entre la position de fermeture (A) et la position d'enlèvement (C), cependant qu'une came de blocage (23) est prévue entre la position d'enclenchement d'ouverture (B) et la position d'enlèvement (C) pour empêcher une transition directe de la position d'enclenchement d'ouverture (B) à la position d'enlèvement (C), cependant que la structure de guidage de pivot (21) est formée, pour une marche sans coincement des pivots (11) dans la structure de guidage de pivot (21), par des contours de rayons et comprend, entre la position de fermeture (A) et la position d'enclenchement d'ouverture (B) et la position d'enlèvement (C) un guidage de type glissière pour atteindre les positions respectives (A, B, C) l'une par rapport à l'autre et cependant que la transition de la position d'enclenchement d'ouverture (B) à la position d'enlèvement (C) peut être obtenue par un déplacement plan parallèle de la grille de ventilateur (10) par rapport au boîtier de base (20).

2. Dispositif de passage d'air selon la revendication 1,
**caractérisé en ce**
**que** le boîtier de base (20) présente deux surfaces intérieures en face l'une de l'autre (22a, 22b) dans lesquelles une structure de guidage de pivot (21) est respectivement configurée, les surfaces intérieures respectives (22a, 22b) du boîtier de base (20) étant adjacentes aux surfaces extérieures respectives (12a, 12b) de la grille de ventilateur (10).

3. Dispositif de passage d'air selon la revendication 1 et 2,
**caractérisé en ce**
**que** la structure de guidage de pivot (21) est configurée avec une profondeur de la surface intérieure (22a, 22b) de 0,2 mm à 2,5 mm, de préférence de 0,5 mm à 1,5 mm et de manière particulièrement préférée de 1,0 mm.

4. Dispositif de passage d'air selon l'une des revendications précédentes 1 à 3,
**caractérisé en ce**
**que** les pivots (11) présentent une partie oblique (13) qui est orientée en direction du boîtier de base (20) qui peut être placé adjacent à la grille de ventilateur (10) et qui comprend un raccourcissement partiel du pivot (11).

5. Dispositif de passage d'air selon l'une des revendications précédentes 1 à 4,
**caractérisé en ce**
**que** le pivot (11) prend la position de fermeture (A), lorsque la grille de ventilateur (10) est à l'état fermé dans le boîtier de base (20), cependant que le boîtier de base (20) encadre partiellement la grille de ventilateur (10) si bien qu'un mouvement plan parallèle entre la grille de ventilateur (0) et le boîtier de base (20) est évité.

6. Dispositif de passage d'air selon la revendication 5,
**caractérisé en ce**
**que** la grille de ventilateur (10) à l'état fermé est reliée au boîtier de base (20) par le pivot (11) en tenant au moins sur le côté de l'axe de pivotement (25).

7. Dispositif de passage d'air selon l'une des revendications précédentes 1 à 6,
**caractérisé en ce**
**qu'**une arête de corps de la grille de ventilation (10) aboute, pour un enclenchement du pivot (11) dans la position d'enclenchement d'ouverture (B), sur une arête de corps du boîtier de base (20) si bien que l'angle de pivotement dans l'axe de pivotement peut être limité.
